# EUROPÄISCHE PATENTSCHRIFT

(11) **EP 3 356 616 B1**
(45) Veröffentlichungstag und Bekanntmachung des Hinweises auf die Patenterteilung: **15.01.2020**
(21) Anmeldenummer: 16778201.0
(22) Anmeldetag: 26.09.2016
(51) Int. Cl.: E04F 13/14, F21V 33/00, F21Y 105/00

(54) **BELEUCHTETE VERKLEIDUNGSSYSTEM UND VERFAHREN ZUR HERSTELLUNG**
ILLUMINATED COVERING SYSTEM AND PRODUCTION METHOD
SYSTÊME DE REVÊTEMENT ÉCLAIRÉ ET PROCÉDÉ DE FABRICATION

(30) Priorität: 29.09.2015 DE 202015006801 U
(43) Veröffentlichungstag der Anmeldung: 08.08.2018
(73) Patentinhaber: Hofer, Robert, 8181 St. Ruprecht an der Raab (AT); Christandl, Dieter, 8160 Weiz (AT); Christandl, Josef, 8181 St. Ruprecht/Raab (AT)
(72) Erfinder: HAIDER, Alexander, 1080 Wien (AT); FISCHER, Oliver, 6971 Hard (AT)
(74) Vertreter: Riebling, Peter
(86) Internationale Anmeldenummer: PCT/EP2016/001601
(87) Internationale Veröffentlichungsnummer: WO 2017/054918

(56) Entgegenhaltungen:
- AU-B2- 2007 278 700
- DE-A1-102007 046 873
- DE-A1-102010 007 325
- FR-A- 1 345 842
- US-A1- 2008 019 121

## Beschreibung

Die Erfindung betrifft eine Keramikfliese nach dem Oberbegriff des Patentanspruchs 1 und ein Verfahren zu deren Herstellung.

Unter dem Begriff "Keramikfliesen" versteht die Erfindung keramische Platten, die als Wandverkleidung und als Bodenbeläge im Innen- wie Außenbereich verwendet werden.

Der Begriff "Fliese" wird auch für Naturstein, Glas, Teppiche usw. genutzt, um Bauteile ähnlicher Form zu klassifizieren. Der Grundkörper einer solchen Keramikfliese besteht vorwiegend aus Tonmineralen, die überwiegend aus feinstkörnigen Verwitterungsprodukten von Feldspat, die mit unterschiedlichsten Beimengungen abgelagert wurden, bestehen. Die Zusammensetzung des Tons, die Aufbereitung und der Brand bestimmen die Farbe des unglasierten Scherbens.

Demnach ist Basis für die Keramikfliese der Werkstoff Ton als Hauptinhaltsstoff. Hierbei werden je nach Anwendung Gemische aus verschiedenen Tonproben verwendet. Neben Ton gehören noch andere mineralische Rohstoffe zur Rezeptur einer Keramik. Die wichtigsten Zuschlagstoffe sind Quarz, Kaolin und Feldspat. Je nach Anwendungszweck werden unter Anderem auch Kalzit, Dolomite, Flussspat oder Schamotte beigemischt.
In der modernen Keramikherstellung werden das Strangpressverfahren und die Pulverpressung (auch Trockenpressung genannt) angewendet. Beim Strangpressen wird aus einer plastischen Keramikmasse durch Extrusion ein endloses Band als Einzel- oder Doppelfliese hergestellt und anschließend in Fliesengröße zerteilt. Im Trockenpressverfahren wird speziell aufbereitetes Keramikpulver mit hohem Druck in Formen gepresst und danach gebrannt.

Ein drittes Verfahren verwendet Rollenpressen für großformatige Feinzeugtafeln. Es wird eine keramische Grundmasse zwischen zwei sich axial bewegenden Walzen gepresst.

Die vorliegende Erfindung betrifft deshalb eine beleuchtete Keramikfliese, die nach einem oder mehreren der oben genannten Verfahren hergestellt ist.

Im Stand der Technik gibt es verschiedene Versuche einer Keramikfliese eine Beleuchtung zuzuordnen. So sieht beispielsweise die DE 20 2009 016 078 U1 vor, dass oberhalb des Grundkörpers einer Keramikfliese ein oder mehrere Lichtquellen in einer transparenten Deckschicht angeordnet sind, wobei diese Deckschicht aus einer transparenten Kunststoffplatte besteht, in der die Leuchtelemente eingebettet sind. Nachteil dieser Anordnung ist jedoch, dass der Charakter der Keramikfliese, nämlich deren hoch belastbare Oberfläche, deren Abriebfestigkeit, deren Schlaghärte und andere bevorzugte Eigenschaften durch die Anordnung einer Beleuchtungsschicht auf der Sichtseite verlorengehen.

Die US 2008/0019121 A1 und DE 10 2007 046873 A1 offenbaren eine beleuchtete Keramikfliese mit den Merkmalen des Oberbegriffs des Anspruchs 1. Die Keramikfliese besitzt auf der Oberseite eines Aussparung, die mit einer lichtleitenden Vergussmasse gefüllt /verschlosssen ist Die lichtleitende Vergussmasse wird von seitlich / innen angeordneten Leuchtmitteln beleuchtet.

Die DE 10 2010 007 325 A1 offenbart ein Farb-Lichtsystem bestehend aus Lichtplatten-Elementen. Die Lichtplatten-Elemente umfassen eine Trägerplatte aus Metall, eine Isolierplatte und eine Leiterplatte mit Leuchtmitteln.

Die DE 20 2004 000 810 U1 sieht eine beleuchtete Fliese aus Glas vor, bei der die Fliesenplatte als Glasplatte ausgebildet ist und mit einem Abstandshalter einen Leuchtmittelträger trägt, auf dem eine Anzahl von Leuchtdioden angeordnet sind. Somit ist ebenfalls oberhalb der Keramikfliese eine Glasplatte angeordnet, die in nicht erwünschter Weise die ursprünglichen physikalischen Eigenschaften der Keramikfliese verändert.

Die DE 295 11 741 U1 beschreibt eine Keramikfliese, in der mehrere Ausschnitte oder Durchbrüche für Einlegeelemente eingearbeitet sind. Nachteil einer solchen Keramikfliese ist, dass die Ausschnitte oder Durchbrüche nachträglich nach der Fertigstellung der Keramikfliese eingebracht werden müssen, was nur mit hohem maschinellen Aufwand verbunden ist und zu einer hohen Ausschussquote führt. Eine fertig gebrannte Keramikplatte mit Ausschnitten zu versehen ist mit einem hohen Werkzeug- und Bearbeitungsaufwand verbunden und überdies besteht bei der Bearbeitung Bruchgefahr.

Der Erfindung liegt die Aufgabe zugrunde, eine beleuchtete Keramikfliese so weiterzubilden, dass deren Herstellung mit geringem Aufwand möglich ist und die physikalischen Eigenschaften einer keramischen Oberfläche mindestens auf der Sichtseite beibehalten werden.

Zur Lösung der gestellten Aufgabe ist die Erfindung durch die technische Lehre des Anspruches 1 gekennzeichnet.

Die Keramikfliese nach der Erfindung sieht unter anderem vor, dass mindestens eine die Sichtseite abdeckende Glasur vorhanden ist, wobei an der Sichtseite ein von ein oder mehreren Lichtquellen erzeugtes Licht sichtbar ist.

Sowohl im Stand der Technik als auch bei der vorliegenden Erfindung wird demgemäß eine dicht gebrannte Keramikfliese vorausgesetzt.

Die Glasur dient der Oberflächenveredelung von Keramikprodukten, wie Steingut, Steinzeug und Porzellan und erzeugt im Gegensatz zum kristallinen porösen Grundstoff eine glasartig geschlossene Oberflächenschicht.

Ab einer Brenntemperatur von 1.250°C sind Steinzeuge von Scherben dicht gebrannt. Porzellan wird bei Temperaturen bis 1.400°C dicht gebrannt. Es ergeben sich interkristalline glasartige Phasen, die eine geschlossene Porosität und gegebenenfalls eine Selbstglasur liefern. Die Glasur erfolgt durch zusätzliche Stoffe, mit denen eine harte geschlossene Oberflächenschicht sowie verschiedene Farben erzeugt werden können. Die Bestandteile der Glasur bilden untereinander und mit dem Grundstoff eine Glasschicht aus einer Mischung aus verschiedenen Oxiden.
Demnach geht die Erfindung von einer gebrannten Keramikfliese aus und Erfindungsgemäß wurde erkannt, dass der Körper der Keramikfliese bereits schon bei deren Herstellung von einer Vielzahl von Bohrungen oder Ausnehmungen durchsetzt werden kann, welche die späteren Lichtaustrittsöffnungen an der Sichtseite bilden.

Wenn demnach bei der Herstellung der Keramikfliese noch im Rohzustand, d. h. nach der Herstellung im Strangpressverfahren oder im Pulverpressverfahren oder im Rollpressverfahren der noch ungebrannte Scherben vorliegt, ist es erfindungsgemäß vorgesehen, dass in dieses noch weiche, ungebrannte Material eine Anzahl von Bohrungen und/oder Ausnehmungen in den Körper der Keramikfliese eingebracht werden, welche den Körper durchsetzen, d. h. von der Sichtseite bis zur Rückseite des Körpers der Fliese hindurch reichen.

Eine solche Lochung oder Schlitzung der noch weichen, ungebrannten Fliese kann beispielsweise durch eine Nagelplatte, durch eine Messerplatte oder durch Stanzwerkzeuge erfolgen, die in den noch weichen, ungebrannten Körper der Keramikfliese die gewünschten Ausstanzungen, Bohrungen oder Ausnehmungen ausführen.

Nach der Anbringung der den Körper der Keramikfliese durchsetzenden Bohrungen, Ausnehmungen oder Schlitzen wird die Keramikfliese in an sich bekannter Weise weiterverarbeitet. Sie wird demnach mit einer flüssigen Glasur beschichtet und zu einem dichten Scherben gebrannt.

Dabei wird angenommen, dass die mindest die Sichtseite abdeckende Glasur während des Brennvorganges - oder auch schon davor - in die vorher angebrachten Bohrungen, Ausnehmungen oder Schlitze im Körper der Keramikfliese hineinfließt und diese Bohrungen, Ausnehmungen oder Schlitze auffüllt.

Ferner ist vorgesehen, dass die verwendete Glasur mindestens teilweise lichtleitend, transparent oder opak ist und den Durchtritt sichtbaren Lichtes ermöglicht.
Nach dem Fertigbrand der so gelochten, geschlitzten oder mit anderen Ausnehmungen versehenen Keramikfliese sind demnach die vorher eingebrachten Ausnehmungen mit der lichtleitenden Glasur aufgefüllt. Erfindungsgemäß ist dann vorgesehen, dass ein oder mehrere Lichtquellen an der Rückseite der Keramikfliese angeordnet sind und in lichtleitender Verbindung mit den Bohrungen, Schlitzen oder Ausnehmungen angeordnet sind.

Es reicht also aus, an der Rückseite der Keramikfliese ein oder mehrere Lichtquellen anzuordnen, welche die Rückseite der Keramikfliese beleuchten, weil die vorher mit der lichtleitenden Glasur aufgefüllten Bohrungen, Schlitze oder anderweitigen Ausnehmungen nunmehr das an der Rückseite erzeugte Licht zur Sichtseite der Keramikfliese transportieren und dort sichtbar machen.

Die Keramikfliese leuchtet demnach an der Sichtseite, weil das Licht aus den Bohrungen, Schlitzen oder Ausnehmungen hindurch tritt und gut erkennbar ist.

Es kann vorgesehen sein, dass die Glasur glasartig transparent und ungefärbt ist, so dass sich eine hohe Leuchtdichte an der Sichtseite der Keramikfliese ergibt.

In anderen Ausgestaltungen kann es auch vorgesehen sein, dass die Glasur eingefärbt ist, wobei für die Einfärbung verschiedene Möglichkeiten bestehen:
1. Die Glasur kann opak eingefärbt sein, was die Lichtleitung durch den Körper der Keramikfliese abschwächt.
2. Die Glasur kann in einer beliebigen Weise durch Zuschlagstoffe eingefärbt sein, so dass der Lichteindruck an der Sichtseite von der Farbe der verwendeten Glasur bestimmt ist.
3. In einer anderen Ausgestaltung können auch zweistufige Brennverfahren verwendet werden, wobei in einem ersten Brennvorgang eine nur die Bohrungen, Ausnehmungen oder Schlitze ausfüllende Glasur verwendet wird, die beispielsweise farbig ausgebildet ist. Nach der Vollendung des ersten Brennvorganges wird dann die Sichtseite der Keramikfliese mit einer zweiten Glasurschicht überdeckt und wiederum gebrannt.

Auf diese Weise können verschiedene, übereinander liegende Glasurschichten erstellt werden.

In einer anderen Ausgestaltung der Erfindung kann es vorgesehen sein, dass die Keramikfliese im Rohzustand gelocht, geschlitzt oder mit sonstigen Ausnehmungen versehen wird und diese Lochungen, Schlitzungen oder Ausnehmungen dann formfüllend durch geeignete Platzhalter während der Anbringung der Glasur und dem späteren Brennvorgang freigehalten werden.

Nach dem Fertigbrennen des Scherbens sind somit die eingebrachten Bohrungen, Schlitze oder Ausnehmungen frei von der oberflächenseitigen Glasur und können nachträglich dann mit einer anderen, bevorzugt aus Kunststoff bestehenden und aushärtenden Masse aufgefüllt werden.

Die Bohrungen, Schlitzungen oder Ausnehmungen sind dann mit einem anderen lichtleitenden Kunststoffmaterial gefüllt als im Vergleich die ausgehärtete Glasur, welche die übrigen Flächen der Keramikfliese bedeckt.

In einer bevorzugten Ausgestaltung der Erfindung ist es vorgesehen, dass die Lichtquelle als Leuchtplatte ausgebildet ist, die als Flächenleuchtelement in eine zugeordnete Bodenausnehmung an der Rückseite der Keramikfliese angepasst wird. Eine solche Leuchtplatte kann z. B. stirnseitig oder zumindest randseitig mit Lichtquellen bestückt werden, die einen gleichmäßigen Leuchteindruck über die gesamte Fläche der Leuchtplatte erzeugen.

Ebenso kann die Leuchtplatte als elektrisch anregbare Fluoreszenz- oder Lumineszenzplatte ausgebildet sein.

Statt einer flächenhaften Leuchtplatte können auch einzelne diskret verteilte Leuchtelemente, wie z. B. LED's verwendet werden, wobei es bevorzugt wird, wenn solche diskreten Leuchtelemente jeweils fluchtend und gegenüber liegend zu der jeweiligen Bohrung oder Ausnehmung an der Rückseite der Keramikfliese befestigt werden, um so direkt mit ihrem Licht in die Bohrung hineinzuleuchten.

In einer anderen Ausgestaltung kann es auch vorgesehen sein, dass die einzelnen diskreten und punktförmigen Leuchtelemente als Leuchtstreifen kettenförmig miteinander elektrisch leitend verbunden sind und solche Leuchtstreifen an der Rückseite der Keramikfliese in zugeordneten Ausnehmungen befestigt sind.

Ein auf die Herstellung einer beleuchteten Fliese gerichtetes Verfahren geht davon aus, dass in einem ersten Verfahrensschritt die ungebrannte Keramikfliese bestehend aus einem mindestens erdfeuchten Tongemisch und anderen mineralische Zuschlagstoffe enthaltenen Rohling im feuchten und verformbaren Rohzustand einem Strangpress- oder Rollumformverfahren unterworfen wird, und dass nunmehr in das plattenförmig verformte, erdfeuchte und weiche ungebrannte Strangmaterial eine Anzahl von Bohrungen und/oder Ausnehmungen in den Körper der Keramikfliese eingebracht werden, welche den Körper von vollständig durchsetzen, d. h. von der Sichtseite bis zur Rückseite des Körpers der Fliese hindurch reichen und dass danach die Bohrungen und/oder Ausnehmungen füllend mit einer mindestens teilweise lichtleitenden Glasur aufgefüllt und geschlossen werden und erst danach der Brennprozess stattfindet, mit dem die Fliese zu einem dichten Keramikscherben gebrannt wird.

In einer bevorzugten Ausführung des Verfahrens wird die Lochung oder Schlitzung der noch weichen, ungebrannten Fliese durch eine Nagelplatte oder durch eine Messerplatte oder durch Stanzwerkzeuge erfolgen, die in den noch weichen, ungebrannten Körper der Keramikfliese die Ausstanzungen, Bohrungen oder Ausnehmungen ausführen.

Der Erfindungsgegenstand der vorliegenden Erfindung ergibt sich nicht nur aus dem Gegenstand der einzelnen Schutzansprüche, sondern auch aus der Kombination der einzelnen Schutzansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert eine Draufsicht auf eine Keramikfliese in fertig gestelltem Zustand
- Figur 2.: Schnitt durch die Keramikfliese nach Figur 1 mit Darstellung der Anbringung einer Leuchtplatte
- Figur 3:: Draufsicht auf die Rückseite der Keramikfliese nach Figur 1 und 2
- Figur 4:: ein vergrößerter Schnitt durch eine lichtführende Bohrung der Keramikfliese nach Figur 1 und 3
- Figur 5:: schematisiert die Rückansicht der Keramikfliese nach Figur 1 bis 3 in perspektivischer Ansicht (zeichnerisch vereinfacht)
- Figur 6:: eine gegenüber Figur 5 abgewandelte Ausführungsform

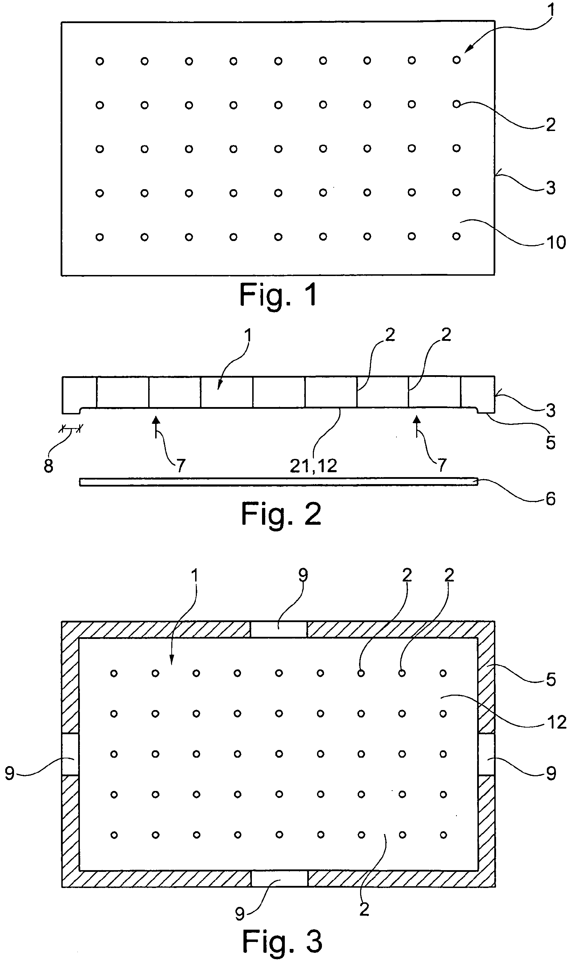

Gemäß Figur 1 bis 3 besteht die Keramikfliese 1 aus einem keramischen Grundkörper, der eine Anzahl von Bohrungen 2 trägt, die im gezeigten Ausführungsbeispiel lichtleitende Öffnungen im Bereich von etwa 0,5 bis 5 mm Durchmesser ausbilden. Sie können regelmäßig oder unregelmäßig über die Sichtseite 10 der Keramikfliese 1 verteilt sein und durchsetzen den gesamten Körper der Keramikfliese 1, wie in Figur 2 dargestellt.

In bevorzugten Ausgestaltungen hat die Keramikfliese 1 eine Gesamtdicke im Bereich von etwa 15 bis 20 mm und der umlaufende Bodenrand 5 hat eine Breite im Bereich von etwa 10 bis 20 mm.

Die Höhe des Bodenrandes 5 über der vertieft eingelassenen Bodenausnehmung 4 kann im Bereich von etwa 4 mm liegen.

In Figuren 1 bis 3 wird vorausgesetzt, dass die Keramikfliese 1 fertig gestellt ist und mindestens die Sichtseite 10 und auch mindestens die umlaufenden Stirnseiten 3 mit einer glasartigen Glasur 11 überzogen sind.

Es kann jedoch auch vorgesehen sein, dass auch die Bodenausnehmung 4 und der Bodenrand 5 mit der glasartigen Glasur 11 überzogen und gebrannt sind.

Zur Erzielung einer beleuchteten Keramikfliese ist es deshalb nach der Figur 2 vorgesehen, dass eine flächenhafte Leuchtplatte 6 in Pfeilrichtung 7 in die Bodenausnehmung 4 eingebracht wird und dort mit nicht näher dargestellten Befestigungsmitteln befestigt wird. Solche Befestigungsmittel können Klemmmittel sein, aber auch Klebe- oder Spannmittel.

Die Fläche der Leuchtplatte 6 soll so gewählt sein, dass sie nicht über die Breite 8 des umlaufenden Bodenrandes 5 hinaus steht, sondern bündig in der Bodenausnehmung 4 eingepasst werden kann.

Die Figur 3 zeigt, dass der umlaufende Bodenrand 5 noch seitlich Ausnehmungen 9 aufweisen kann. Durch diese Ausnehmungen 9 können die Stromversorgungen für die Leuchtelemente der Leuchtplatte 6 heran geführt werden. Ebenso ist es möglich, im Bereich dieser Ausnehmungen die Leuchtelemente selbst anzuordnen, die dann die Leuchtplatte 6 von der Stirnseite her beleuchten und somit einen durchgehenden, flächigen Leuchteindruck der Leuchtplatte 6 erzeugen.

Die Figur 3 zeigt, dass die hier beispielhaft dargestellten Bohrungen 2 bis in die Bodenseite 12 der Keramikfliese 1 hinein reichen, so dass der Körper der Keramikfliese 1 durch die Bohrungen 2 durchsetzt ist.

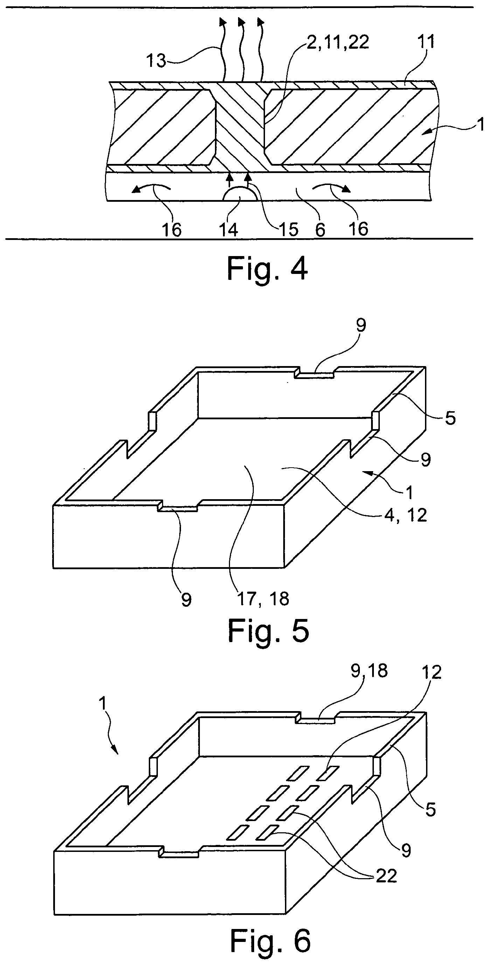

Die Figur 4 zeigt schematisiert die fertig gebrannte Keramikfliese 1, wobei erkennbar ist, dass die Glasur 11 nach dem Brennvorgang formfüllend in die Bohrung 2 der Keramikfliese 1 eingelaufen ist und die Bohrung 2 vollständig und abgedichtet ausfüllt.

Damit ist sichergestellt, dass bei der Benutzung der Keramikfliese deren Charakter beibehalten wird, d. h., es wird eine hochabriebfeste Oberfläche mit hoher Bruchsicherheit und hoher Härte beibehalten, wie sie bei unbeleuchteten Keramikfliesen 1 erwartet wird.

Die Figur 4 zeigt auch noch, dass anstatt der Leuchtplatte 6 nunmehr auch diskrete Leuchtelemente 14 so angeordnet werden können, die fluchtend gegenüberliegend zu jeweils einer Bohrung 2 angeordnet sind. Die diskreten Leuchtelemente können auch ein farbiges Licht erzeugen.

Das so erzeugte Licht strahlt in Pfeilrichtung 15 in die Bohrung 2 hinein und verteilt sich auch in Pfeilrichtung 16 an der Unterseite der Keramikfliese 1 und kann sich in der Leuchtplatte 6 in diesen Pfeilrichtungen 15, 16 fortsetzen.

Die Figur 5 zeigt stark schematisiert die Anordnung, wenn einzelne Leuchtelemente 14 in der Art von Leuchtstreifen 17 in der Bodenausnehmung 4 der Keramikfliese 1 verteilt angeordnet sind. Sie durchsetzen jeweils die stirnseitig angeordneten Ausnehmungen 9.

Sie können auch kreuzweise angeordnet werden, so dass die gegenüberliegend angeordneten Ausnehmungen 9 ebenfalls mit einem weiteren Leuchtstreifen 17 durchsetzt sein können.

Ebenso ist es möglich, durch die Ausnehmungen 9 ein Stromkabel 18 hindurchzuführen, um die nebeneinander liegenden Keramikfliesen 1 elektrisch leitfähig durch geeignete Kabel miteinander zu verbinden.

Die Figur 6 zeigt in Abwandlung zu den vorher genannten Ausführungsbeispielen, dass statt der Bohrungen 2 auch beliebig geformte Ausnehmungen 22 im Körper der Keramikfliese 1 angeordnet sein können.

Im gezeigten Ausführungsbeispiel sind diese Ausnehmungen 22 schlitzförmig ausgebildet.

Die so durch die Beleuchtungsquellen erzeugten Lichtstrahlen 13 (siehe Figur 4) sind gut von der Sichtseite 10 her erkennbar und können sich sogar noch lichtleitend durch die Glasur 11 erstrecken und die Glasur 11 aufgrund ihrer glasartigen Struktur noch zusätzlich als Lichtleiter nutzen, so dass sich ein flächenhafter Leuchteindruck an der Sichtseite 10 der Keramikfliese 1 ergibt.

### Zeichnungslegende

- 1: Keramikfliese
- 2: Bohrung
- 3: Stirnseite
- 4: Bodenausnehmung
- 5: Bodenrand
- 6: Leuchtplatte
- 7: Pfeilrichtung
- 8: Breite (von 5)
- 9: Ausnehmung (von 5)
- 10: Sichtseite
- 11: Glasur
- 12: Bodenseite
- 13: Lichtstrahl
- 14: Leuchtelement
- 15: Pfeilrichtung
- 16: Pfeilrichtung
- 17: Leuchtstreifen
- 18: Stromkabel
- 19:
- 20:
- 21:
- 22: Ausnehmung

## Patentansprüche

1. Beleuchtete Keramikfliese (1), die eine oder mehrere Lichtquellen (6, 14) umfasst, deren erzeugtes Licht an einer Sichtseite (10) der Keramikfliese sichtbar ist, wobei der Körper der Keramikfliese (1) von mindestens einer Bohrung (2) und/oder Ausnehmung (22) durchsetzt ist, **dadurch gekennzeichnet, dass** mindestens die Sichtseite (10) mit einer Glasur (11) abgedeckt ist, wobei die Glasur als lichtleitende Glasur (11) ausgebildet ist und die Bohrung (2) und/oder die Ausnehmung (22) abgedichtet ausfüllt, und dass die ein oder mehreren Lichtquellen (6, 14) an der Rückseite der Keramikfliese (1) angeordnet sind und in lichtleitender Verbindung mit der Bohrung (2) und/oder Ausnehmung (22) sind, wobei die Lichtquelle als Leuchtplatte (6) ausgebildet ist, die in einer flächenhaft vertieften Bodenausnehmung (4) an der Bodenseite (12) der Keramikfliese (1) angeordnet ist, wobei die Bodenausnehmung (4) durch einen erhöhten, umlaufenden Bodenrand (5) gebildet ist, in dem eine oder mehrere Ausnehmungen (9) angeordnet sind .

2. Beleuchtete Keramikfliese nach Anspruch 1, **dadurch gekennzeichnet, dass** die Keramikfliese im Rohzustand vor dem Brennen die mindestens eine Bohrung (2) und/oder Ausnehmung (22) aufweist.

3. Beleuchtete Keramikfliese nach einem der Ansprüche 1 oder 2, **dadurch gekennzeichnet, dass** die Lichtquellen als punktuelle Leuchtelemente (14) insbesondere in der Ausbildung als LED und/oder OLED und/oder Fluoreszenz-Elemente ausgebildet sind.

4. Beleuchtete Keramikfliese nach einem der Ansprüche 1 bis 3, **dadurch gekennzeichnet, dass** die Lichtquellen (6, 14) in der Art von Leuchtstreifen an der Bodenseite (12) in der Bodenausnehmung (4) angeordnet sind.

5. Beleuchtete Keramikfliese nach einem der Ansprüche 1 bis 4, **dadurch gekennzeichnet, dass** die Glasur (11) eine dichtgebrannte, glasartige Schicht oder als aushärtbare Kunststoffzusammensetzung ausgebildet ist.

6. Verfahren zur Herstellung einer beleuchteten Keramikfliese (1), nach einem der Ansprüche 1-5, wobei in einem ersten Verfahrensschritt die ungebrannte Keramikfliese bestehend aus einem mindestens erdfeuchten Tongemisch und anderen mineralische Zuschlagstoffe enthaltenen Rohling im feuchten und verformbaren Rohzustand einem Strangpress-oder Rollumformverfahren unterworfen wird, in einem zweiten Verfahrensschritt mit einer Glasur versehen wird und in einem dritten Verfahrensschritt einem Brennprozess unterworfen wird, mit dem die Keramikfliese als dichter Tonscherben erzeugt wird, wobei im Übergang zwischen dem ersten und dem zweiten Verfahrensschritt in das weiche, ungebrannte Material eine Anzahl von Bohrungen und/oder Ausnehmungen in den Körper der Keramikfliese eingebracht werden, welche den Körper durchsetzen, d. h. von der Sichtseite bis zur Rückseite des Körpers der Fliese hindurch reichen, und dass danach die Bohrungen und/oder Ausnehmungen füllend mit einer mindestens teilweise lichtleitenden Glasur aufgefüllt und geschlossen werden, **dadurch gekennzeichnet, dass** ein oder mehreren Lichtquellen (6, 14) an der Rückseite der Keramikfliese (1) angeordnet werden, die in lichtleitender Verbindung mit der Bohrung (2) und/oder Ausnehmung (22) sind, wobei die Lichtquelle als Leuchtplatte (6) ausgebildet ist, die in einer flächenhaft vertieften Bodenausnehmung (4) an der Bodenseite (12) der Keramikfliese (1) angeordnet wird, wobei die Bodenausnehmung (4) durch einen erhöhten, umlaufenden Bodenrand (5) gebildet wird, in dem eine oder mehrere Ausnehmungen (9) angeordnet sind.

7. Verfahren nach Anspruch 6, **dadurch gekennzeichnet, dass** die Lochung oder Schlitzung der noch weichen, ungebrannten Fliese durch eine Nagelplatte oder durch eine Messerplatte oder durch Stanzwerkzeuge erfolgt, die in den noch weichen, ungebrannten Körper der Keramikfliese die Ausstanzungen, Bohrungen oder Ausnehmungen ausführen.

## Claims

1. Illuminated ceramic tile (1) comprising one or more light sources (6, 14), the generated light of which is visible at a visible side (10) of the ceramic tile, wherein the body of the ceramic tile (1) is penetrated by at least one bore (2) and/or recess (22), **characterised in that** at least the visible side (10) is covered by a glaze (11), wherein the glaze is formed as a light-conducting glaze (11) and fills up the bore (2) and/or the recess (22) in sealing manner, and **in that** the one or more light sources (6, 14) are arranged on the rear side of the ceramic tile (1) and are in light-conducting connection with the bore (2) and/or recess (22), wherein the light source is designed as a lighting panel (6) which is arranged in a two-dimensionally hollowed base recess (4) on the base side (12) of the ceramic tile (1), wherein the base recess (4) is formed by an elevated, annular base edge (5) in which one or more recesses (9) are arranged.

2. Illuminated ceramic tile according to claim 1, **characterised in that** in the crude state before firing, the ceramic tile has the at least one bore (2) and/or recess (22).

3. Illuminated ceramic tile according to one of claims 1 or 2, **characterised in that** the light sources are designed as spot lighting elements (14), in particular in the design as LEDs and/or OLEDs and/or fluorescent elements.

4. Illuminated ceramic tile according to one of claims 1 to 3, **characterised in that** the light sources (6, 14) are arranged in the base recess (4) like lighting strips on the base side (12).

5. Illuminated ceramic tile according to one of claims 1 to 4, **characterised in that** the glaze (11) is formed as a densely fired, vitreous layer or as a curable plastic composition.

6. Method for producing an illuminated ceramic tile (1) according to one of claims 1-5, wherein in a first method step, the unfired ceramic tile consisting of a blank containing at least earth-moist clay mixture and other mineral additives in the moist and mouldable crude state, is subjected to an extrusion process or roll-shaping process, in a second method step, is provided with a glaze and in a third method step, is subjected to a firing process, with which the ceramic tile is generated as a dense clay fragment, wherein in the transition between the first and the second method step, into the soft unfired material a number of bores and/or recesses are introduced into the body of the ceramic tile and penetrate the body, that is, extend through from the visible side as far as the rear side of the body of the tile, and in that then the bores and/or recesses are filled up and closed in filling manner with an at least partly light-guiding glaze, **characterised in that** one or more light sources (6, 14) are arranged on the rear side of the ceramic tile (1) and are in light-conducting connection with the bore (2) and/or recess (22), wherein the light source is designed as a lighting panel (6) which is arranged in a two-dimensionally hollowed base recess (4) on the base side (12) of the ceramic tile (1), wherein the base recess (4) is formed by an elevated, annular base edge (5) in which one or more recesses (9) are arranged.

7. Method according to claim 6, **characterised in that** the perforation or slotting of the still soft, unfired tile is effected by a nail plate or by a knife plate or by punching tools which construct the punched-out areas, bores or recesses in the still soft, unfired body of the ceramic tile.

## Revendications

1. Carreau de céramique éclairé (1) qui comprend une ou plusieurs sources de lumière (6, 14) dont la lumière produite est visible sur un côté apparent (10) du carreau de céramique, dans lequel le corps du carreau de céramique (1) est traversé par au moins un perçage (2) et/ou évidement (22), **caractérisé en ce qu'**au moins le côté apparent (10) est recouvert d'un émaillage (11), dans lequel l'émaillage est formé comme un émaillage photoconducteur (11) et remplit de manière étanche le perçage (2) et/ou l'évidement (22), et **en ce que** la ou les sources de lumière (6, 14) sont disposées sur le côté arrière du carreau de céramique (1) et sont en relation photoconductrice avec le perçage (2) et/ou l'évidement (22), dans lequel la source de lumière est formée comme une plaque luminescente (6) qui est disposée dans une cavité de fond (4), creusée de manière plane, sur le côté de fond (12) du carreau de céramique (1), dans lequel la cavité de fond (4) est formée par un bord de fond (5) périphérique rehaussé dans lequel sont disposés un ou plusieurs évidements (9).

2. Carreau de céramique éclairé selon la revendication 1, **caractérisé en ce que** le carreau de céramique présente à l'état cru avant la cuisson le au moins un perçage (2) et/ou évidement (22).

3. Carreau de céramique éclairé selon l'une des revendications 1 ou 2, **caractérisé en ce que** les sources lumineuses sont formées comme des éléments lumineux ponctuels (14) en particulier sous la forme de LED et/ou d'OLED et/ou d'éléments fluorescents.

4. Carreau de céramique éclairé selon l'une des revendications 1 à 3, **caractérisé en ce que** les sources lumineuses (6, 14) sont disposées à la manière de bandes lumineuses sur le côté de fond (12) dans la cavité de fond (4).

5. Carreau de céramique éclairé selon l'une des revendications 1 à 4, **caractérisé en ce que** l'émaillage (11) est une couche vitreuse ayant subi une cuisson d'étanchéité ou est formé comme une composition de matière plastique durcissable.

6. Procédé pour fabriquer un carreau de céramique éclairé (1) selon l'une des revendications 1 à 5, dans lequel dans une première étape de procédé le carreau de céramique non cuit, composé d'une ébauche contenant un mélange d'argile au moins à humidité naturelle et d'autres matières de charge minérales, est soumis à l'état cru humide et déformable à un procédé d'extrusion ou de formage par roulage, dans une deuxième étape de procédé est pourvu d'un émaillage et dans une troisième étape de procédé est soumis à un processus de cuisson avec lequel le carreau de céramique est produit sous la forme d'un tesson d'argile étanche, dans lequel dans la transition entre les première et deuxième étapes de procédé on réalise dans le matériau mou non cuit un certain nombre de perçages et/ou d'évidements dans le corps du carreau de céramique, qui traversent le corps, c'est-à-dire qu'ils vont du côté apparent jusqu'au côté arrière du corps du carreau, et les perçages et/ou évidements sont ensuite entièrement remplis et fermés avec un émaillage au moins partiellement photoconducteur, **caractérisé en ce que** l'on dispose une ou plusieurs sources de lumière (6, 14) sur le côté arrière du carreau de céramique (1), qui sont en relation photoconductrice avec le perçage (2) et/ou l'évidement (22), dans lequel on forme la source de lumière comme une plaque luminescente (6) que l'on dispose dans une cavité de fond (4), creusée de manière plane, sur le côté de fond (12) du carreau de céramique (1), dans lequel la cavité de fond (4) est formée par un bord de fond (5) périphérique rehaussé dans lequel sont disposés un ou plusieurs évidements (9).

7. Procédé selon la revendication 6, **caractérisé en ce que** la perforation ou le fendage du carreau non cuit encore mou se fait par une plaque cloutée ou une plaque à lames ou par des outils de découpage qui réalisent dans le corps non cuit encore mou du carreau de céramique les découpages, perçages ou évidements.
